# EUROPEAN PATENT APPLICATION

(11) **EP 4 604 053 A1**
(43) Date of publication of application: **20.08.2025**
(21) Application number: 23876999.6
(22) Date of filing: 22.08.2023
(51) Int. Cl.: G06T 7/00, G01N 21/88, G06V 10/774

(54) **CLASSIFICATION MODEL GENERATING SYSTEM, CLASSIFICATION MODEL GENERATING METHOD, AND PROGRAM**

(30) Priority: 12.10.2022 JP 2022164083
(71) Applicant: Panasonic Intellectual Property Management Co., Ltd., Kadoma-shi, Osaka 571-0057 (JP)
(72) Inventor: FURUTA, Yoshinobu, Kadoma-shi, Osaka 571-0057 (JP); ODAJIMA, Yoshikazu, Kadoma-shi, Osaka 571-0057 (JP)
(74) Representative: Novagraaf International SA
(86) International application number: PCT/JP2023/030068
(87) International publication number: WO 2024/079991

(57) **Abstract**

A classification model generating system includes: an obtainer (11) that obtains a good product image group including a plurality of good product images; a defective portion image generator (12) that generates a plurality of defective portion images, based on a seed image group obtained by geometrically transforming a seed image simulating a defective portion, the seed image being an artificially drawn image; a combination processing unit (13) that combines each of the plurality of defective portion images with the good product image group to generate a defective product image group; and a classification model generator (23) that performs classification training by using a part of the good product image group and a part of the defective product image group as a training image group to generate a classification model.

## Description

### [Technical Field]

The present disclosure relates to a classification model generating system, a classification model generating method, and a program.

### [Background Art]

It is known that, at the time of performing machine learning, such as deep learning, many images are required as training data to ensure the accuracy of a model after machine learning.

However, when machine learning is performed on a model for inspection in manufacturing processes, for example, many good product images are easy to obtain, but many defective product images are often difficult to obtain. This is because the number of defective product images obtained in the inspection process is often small relative to the population parameter, namely, the total number of images subjected to the inspection process. Even if many defective product images can be obtained, defect modes are often imbalanced. Therefore, variations in the defective product image to be used as training data cannot be ensured, and even if machine learning is performed on the model using the obtained defective product images and good product images, it is difficult to ensure inspection accuracy that can withstand practical use, which is problematic.

Moreover, even if many defective product images can be obtained, a significant number of man-hours are required for a sorting operation, and when the model is reconstructed due to a change or addition of a defect mode, the sorting operation needs to be repeated, which is problematic in terms of maintenance and management.

In contrast, for example, Patent Literature (PTL) 1 discloses a defective product image generating method and the like that can multiply defective product images. According to the method disclosed in PTL 1, a defective product image similar to the real thing can be generated from a good product image and a partial image including a defective portion.

### [Citation List]

### [Patent Literature]

[PTL 1] Japanese Unexamined Patent Application Publication No. 2021-135903

### [Non Patent Literature]

[NPL 1] Maayan Frid-Adar, Idit Diamant, Eyal Klang, Michal Amitai, Jacob Goldberger, Hayit Greenspan, "GAN-based Synthetic Medical Image Augmentation for Increased CNN Performance in Liver Lesion Classification", Neurocomputing, Vol. 321, 10 December 2018, pp. 321-331.

### [Summary of Invention]

### [Technical Problem]

However, in the technique disclosed in PTL 1, defective product images are multiplied after a database of defective portions is created, necessitating the collection and sorting of defective product images that include defective portions.

The present disclosure has been made in view of the circumstances described above, and an object of the present disclosure is to provide a classification model generating system and the like that can generate, without collecting and sorting defective product images, a classification model capable of classifying between a good product image and a defective product image.

### [Solution to Problem]

In order to solve the above problem, a classification model generating system according to one embodiment of the present disclosure includes: an obtainer that obtains a good product image group including a plurality of good product images; a defective portion image generator that generates a plurality of defective portion images, based on a seed image group obtained by geometrically transforming a seed image, the seed image having been artificially generated by drawing a part simulating a defective portion; a combination processing unit that combines each of the plurality of defective portion images with the good product image group to generate a defective product image group; and a classification model generator that performs classification training by using a part of the good product image group and a part of the defective product image group as a training image group to generate a classification model.

Note that the above general or specific aspect may be implemented by a device, method, system, integrated circuit, computer program, or recording medium such as a computer-readable compact disc read-only memory (CD-ROM), or by any combination of the device, method, system, integrated circuit, computer program, and recording medium.

### [Advantageous Effects of Invention]

According to the classification model generating system and the like of the present disclosure, it is possible to generate, without collecting and sorting defective product images, a classification model capable of classifying between a good product image and a defective product image.

### [Brief Description of Drawings]

[FIG. 1]

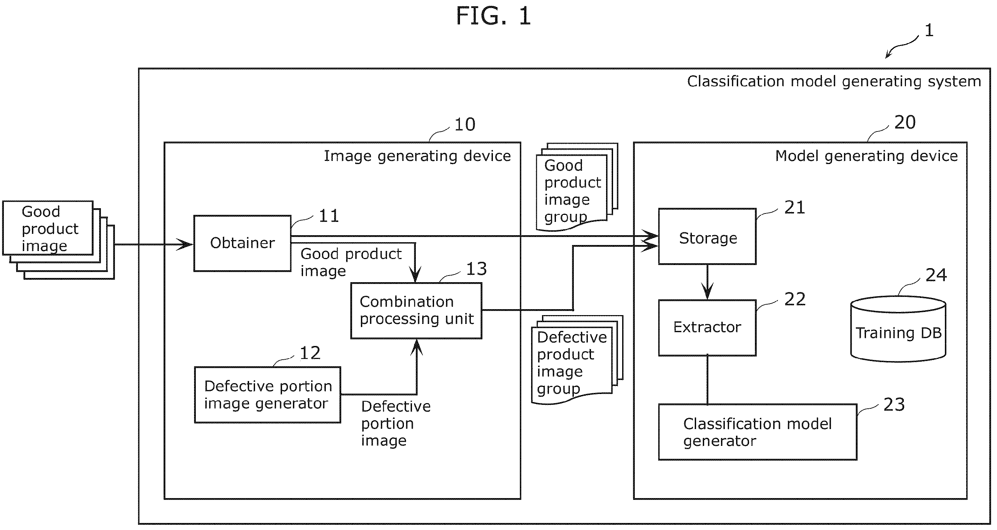

   FIG. 1 is a diagram illustrating an example of a configuration of a classification model generating system according to an embodiment.
[FIG. 2A]

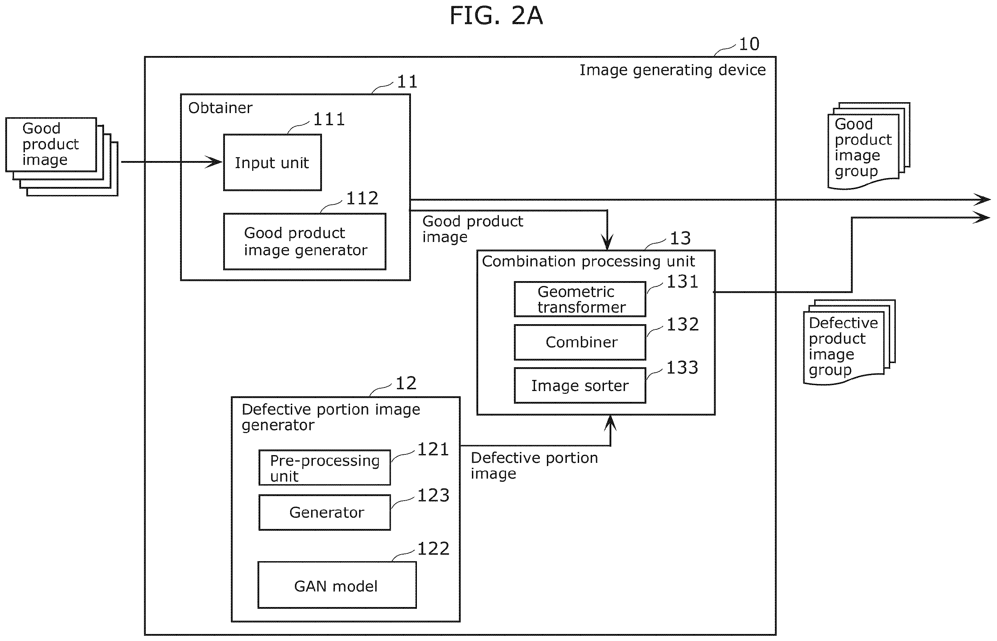

   FIG. 2A is a block diagram illustrating an example of the detailed configuration of the image generating device according to the embodiment.
[FIG. 2B]

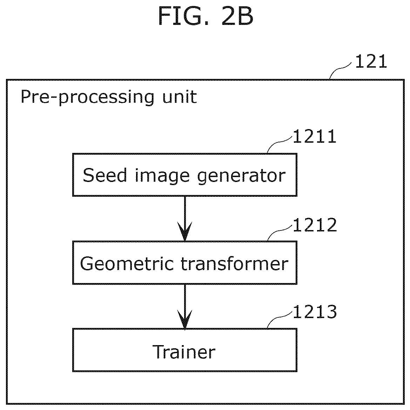

   FIG. 2B is a block diagram illustrating an example of the detailed configuration of a pre-processing unit illustrated in FIG. 2A.
[FIG. 3A]

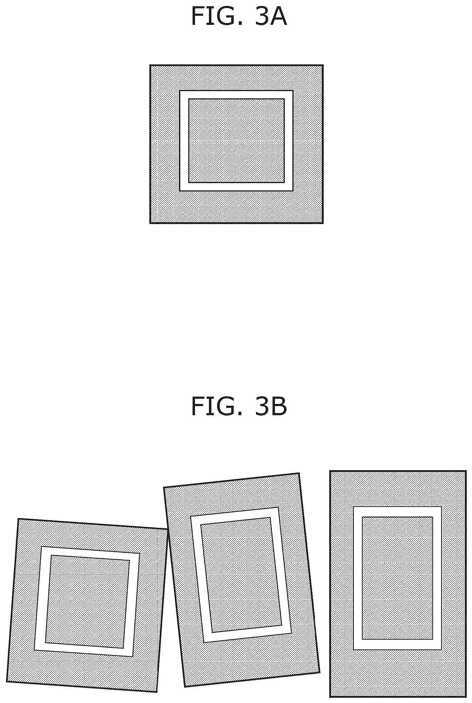

   FIG. 3A is a diagram conceptually illustrating an example of a seed image according to the embodiment.
[FIG. 3B]
   FIG. 3B is a diagram conceptually illustrating an example of a seed image group obtained by geometrically transforming the seed image according to the embodiment.
[FIG. 4]

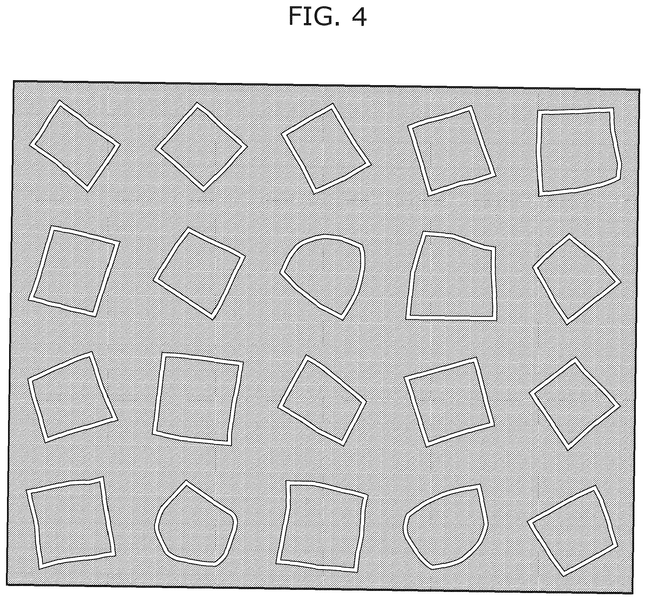

   FIG. 4 is a diagram conceptually illustrating an example of a plurality of defective portion images according to the embodiment.
[FIG. 5A]

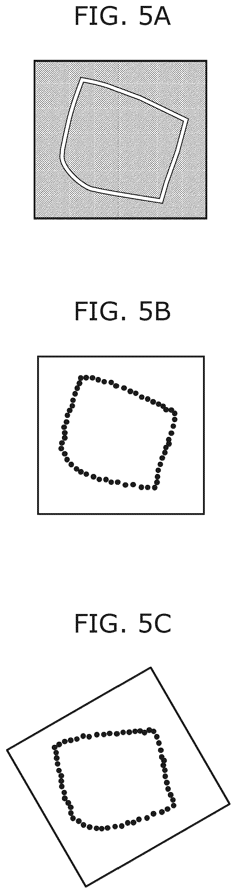

   FIG. 5A is a diagram conceptually illustrating an example of a defective portion image according to the embodiment.
[FIG. 5B]
   FIG. 5B is a diagram conceptually illustrating an example of an image with an alpha channel added to the background of the defective portion image illustrated in FIG. 5A.
[FIG. 5C]
   FIG. 5C is a diagram conceptually illustrating an example of an image obtained by performing a geometric transformation, which is a rotation, on the image with the alpha channel added to the background illustrated in FIG. 5B.
[FIG. 5D]

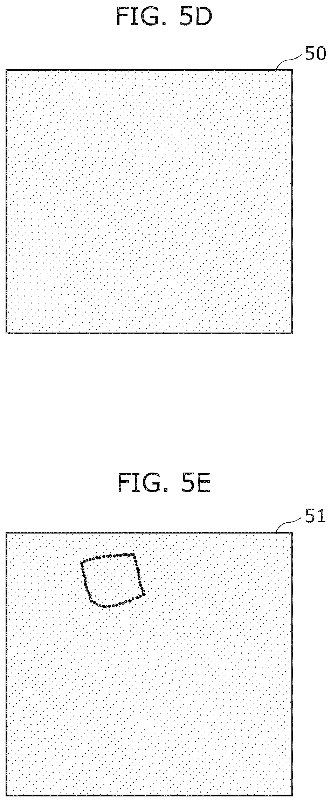

   FIG. 5D is a diagram conceptually illustrating an example of a good product image according to the embodiment.
[FIG. 5E]
   FIG. 5E is a diagram conceptually illustrating an example of a defective product image candidate according to the embodiment.
[FIG. 6A]

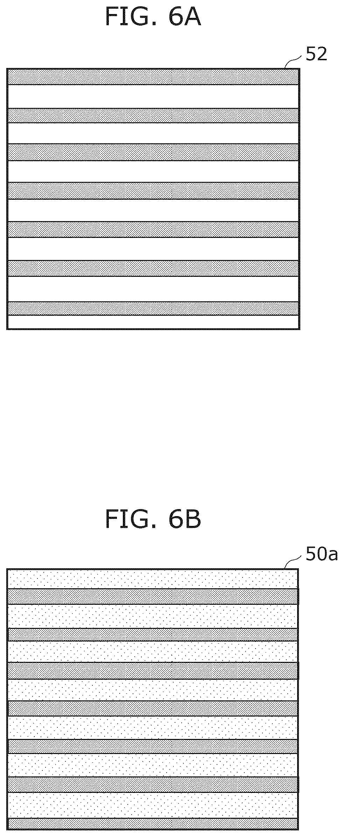

   FIG. 6A is a diagram conceptually illustrating an example of a mask image according to the embodiment.
[FIG. 6B]
   FIG. 6B is a diagram conceptually illustrating an example of a masked good product image according to the embodiment.
[FIG. 6C]

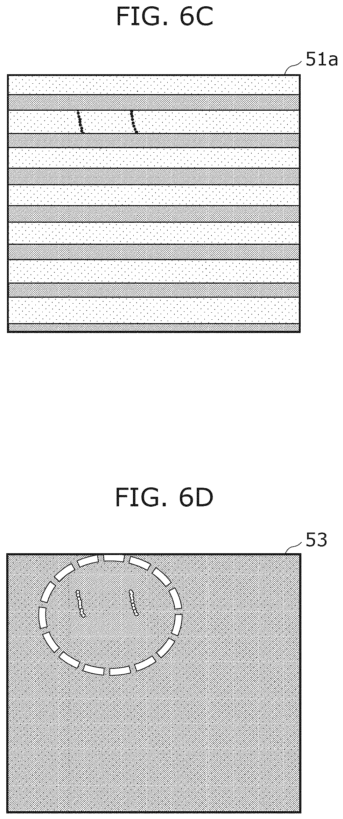

   FIG. 6C is a diagram conceptually illustrating an example of a masked defective product image candidate according to the embodiment.
[FIG. 6D]
   FIG. 6D is a diagram conceptually illustrating an example of a difference image according to the embodiment.
[FIG. 7]

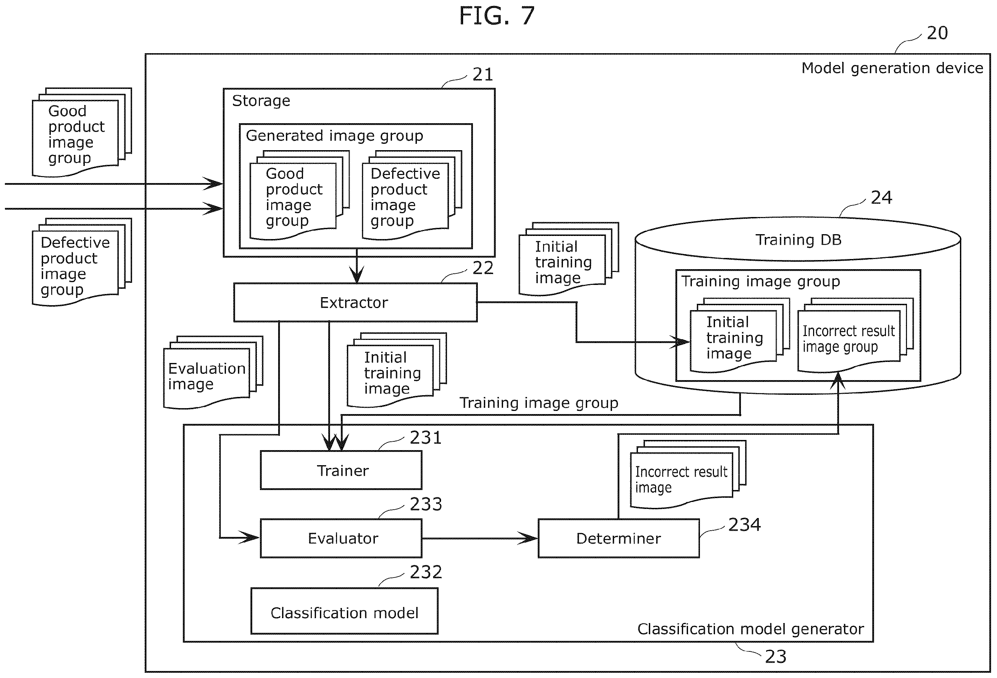

   FIG. 7 is a block diagram illustrating an example of the detailed configuration of a model generating device according to the embodiment.
[FIG. 8]

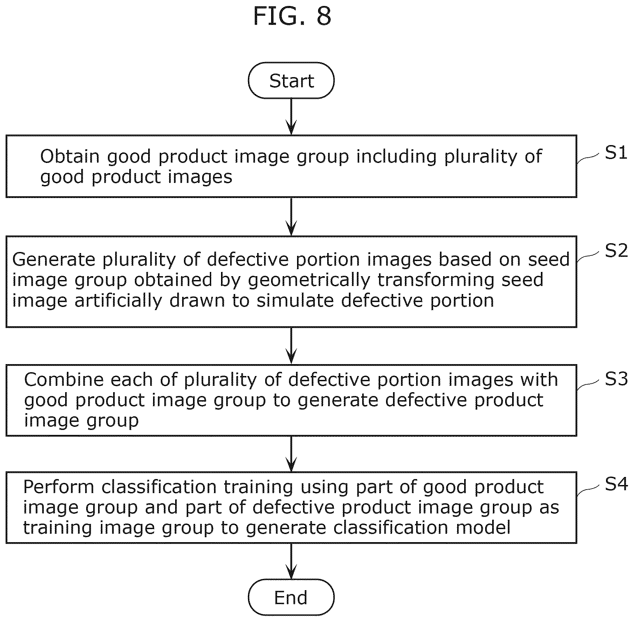

   FIG. 8 is a flowchart illustrating processes in a classification model generating method for the classification model generating system according to the embodiment.
[FIG. 9]

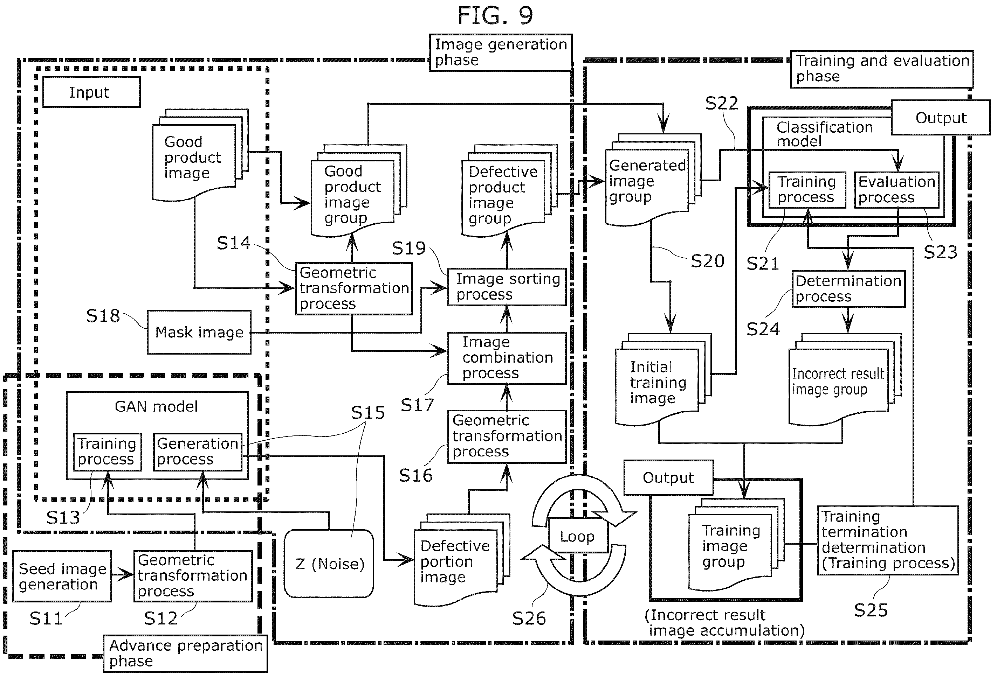

   FIG. 9 is a diagram illustrating the process flow of the classification model generating method according to Example 1.

### [Description of Embodiment]

Each of the embodiments described below shows one specific example of the present disclosure. The numerical values, shapes, components, steps, order of steps, and the like shown in the following embodiments are examples and are not intended to limit the present disclosure. Among the components in the following embodiments, the components that are not described in the independent claims indicating the highest-level concepts will be described as optional components. In addition, each of the components can be combined across all the embodiments.

### (Embodiment)

A classification model generating method for classification model generating system 1 according to an embodiment will be described below with reference to the drawings.

### [1. Classification Model Generating System 1]

FIG. 1 is a diagram illustrating an example of the configuration of classification model generating system 1 according to the embodiment.

Classification model generating system 1 according to the present embodiment is a system for generating, without collecting and sorting defective product images, a classification model capable of classifying between a good product image and a defective product image. A defective product image is an image in which a defect such as a scratch or foreign matter appears. For example, a defective product image in an inspection process is an image showing that the manufactured product in the image includes a defect and that the manufactured product is defective. A good product image is an image in which no defects appear. For example, a good product image in an inspection process is an image showing that the manufactured product in the image includes no defects and that the manufactured product has passed inspection.

As illustrated in FIG. 1, classification model generating system 1 includes image generating device 10 and model generating device 20. These may be connected by a communication network or by a physical communication line such as a bus. In the present embodiment, image generating device 10 and model generating device 20 are described as different hardware configurations, but are not limited thereto. Image generating device 10 and model generating device 20 may be constructed on one piece of hardware to constitute classification model generating system 1.

Image generating device 10 generates a defective product image group from a defective portion image and a good image group: the defective portion image is generated based on a seed image that is artificially drawn to simulate a defective portion, such as a scratch or foreign matter, while the good product image group is obtained by augmenting the obtained good product image. Details will be described later.

Model generating device 20 uses the defective product image group, generated by image generating device 10, and the good product image group, obtained by image generating device 10 augmenting the good product image, to generate a classification model of a defect teaching type, that is, a classification model capable of classifying a good product image and a defective product image. Details will be described later.

### [2. Image Generating Device 10]

FIG. 2A is a block diagram illustrating an example of the detailed configuration of image generating device 10 according to the embodiment.

Image generating device 10 is implemented by a computer including, for example, a processor (microprocessor), memory, and a communication interface. In image generating device 10, the processor executes a control program stored in the memory to implement various functions. Note that image generating device 10 may operate with a partial configuration included in a cloud server.

In the present embodiment, as illustrated in FIG. 1, image generating device 10 includes obtainer 11, defective portion image generator 12, and combination processing unit 13. Hereinafter, each component will be described.

### [2.1 Obtainer 11]

As illustrated in FIG. 2A, obtainer 11 includes input unit 111 and good product image generator 112, and obtains a good product image group including a plurality of good product images.

Input unit 111 is where a plurality of good product images are input. Input unit 111 is implemented by, for example, a communication interface or an input interface, and can obtain a plurality of good product images through input of a plurality of pre-prepared good product images. The plurality of pre-prepared good product images can be obtained in a manufacturing process, for example, in an inspection process. Note that the number of the plurality of pre-prepared good product images is about 1,000, for example, but may be several tens.

Good product image generator 112 geometrically transforms the plurality of good product images input to input unit 111 to generate one or more new good product images. Good product image generator 112 obtains the plurality of good product images and the generated one or more new good product images as a good product image group. Here, the geometric transformation includes, for example, enlargement or reduction (size change), rotation, translation, X-axis mirroring (X-axis symmetric movement), Y-axis mirroring (Y-axis symmetric movement), exchange of x- and y-coordinates (mirroring), shearing, trimming, contrast change processing, luminance change processing, filtering, and blurring, but is not limited thereto. Any geometric transformation that does not destroy shape features is acceptable. In this manner, good product image generator 112 augments (multiplies) the plurality of good product images input to input unit 111 to obtain a good product image group. Note that the number of good product image groups is, for example, about 10,000, but may be several thousand or several tens of thousands.

### [2.2 Defective Portion Image Generator 12]

As illustrated in FIG. 2A, defective portion image generator 12 includes pre-processing unit 121, GAN model 122, and generator 123. Defective portion image generator 12 generates a plurality of defective portion images based on a seed image group obtained by geometrically transforming a seed image, which was artificially generated by simulating a defective portion. Here, the defective portion image is an image showing a defect, such as a scratch or foreign matter, that is a defective portion in a manufactured product, for example.

### [2.2.1 GAN model 122]

GAN model 122 is a generative model formed with an architecture called generative adversarial networks (GAN) and is trained using a seed image group. In the present embodiment, GAN model 122 is formed of, for example, a deep convolutional GAN (DCGAN) or a Wasserstein GAN (WGAN), but is not limited thereto. GAN model 122 may be formed of, for example, a spectral normalization GAN (SNGAN) or a least squares GAN (LSGAN), and may be formed of a GAN with features that can increase variations in similarity with reference to the trained image.

### [2.2.2 Pre-Processing Unit 121]

FIG. 2B is a block diagram illustrating an example of the detailed configuration of pre-processing unit 121 illustrated in FIG. 2A.

As illustrated in FIG. 2B, pre-processing unit 121 includes seed image generator 1211, geometric transformer 1212, and trainer 1213, and performs pre-processing for generating a defective portion image, such as generating a seed image and training GAN model 122. Pre-processing unit 121 includes, for example, a computer including memory and a processor (microprocessor), and the processor executes a predetermined program stored in the memory to implement the function of each component.

Seed image generator 1211 generates a seed image that is artificially drawn to simulate a defective portion. Here, seed image generator 1211 generates a seed image formed of a background and a defect part simulating a defective portion, and generates a seed image so that the defect part and the background are separable by a single threshold. The background may be filled with a single color.

In the present embodiment, seed image generator 1211 executes an application such as paint software, for example, and artificially draws a figure simulating a defective portion as a defect part according to a user operation, thereby generating one seed image that is an artificial image to serve as a defect seed.

FIG. 3A is a diagram conceptually illustrating an example of a seed image according to the embodiment.

In the example illustrated in FIG. 3A, a square frame is artificially drawn as a defect part. The defect part of the seed image is drawn in white while the background is drawn in black. Note that the defect part is preferably drawn in a color similar to that of the defect part to be recognized, and the background is preferably drawn in a single color that does not overlap with the defect part. As described above, by drawing the background filled with a single color, the defect part and the background of the seed image are separable by a single threshold.

Geometric transformer 1212 geometrically transforms the seed image generated by seed image generator 1211 to obtain a seed image group. Geometric transformer 1212 includes a processor and memory (not illustrated), and the processor executes a predetermined program stored in the memory to implement the geometric transformation process.

In the present embodiment, geometric transformer 1212 performs a geometric transformation process, such as size change, contrast change, rotation, or stretching, on one seed image generated by seed image generator 1211, thereby multiplying (augmenting) the seed image that can be a defect. As a result, geometric transformer 1212 can obtain a seed image group including one original seed image and a plurality of multiplied seed images.

FIG. 3B is a diagram conceptually illustrating an example of a seed image group obtained by geometrically transforming the seed image according to the embodiment.

The example illustrated in FIG. 3B illustrates a part of the seed image group obtained by performing the geometric transformation process, such as size change, rotation, or stretching, on one seed image illustrated in FIG. 3A.

Trainer 1213 uses the seed image group obtained by geometrically transforming the seed image to train GAN model 122 on the features of the seed image group. Trainer 1213 includes a processor and memory (not illustrated), and the processor executes a predetermined program stored in the memory to implement the training process for training GAN model 122 using the seed image group. Thus, trainer 1213 can use the seed image group to train GAN model 122 on the features of variations in defect.

### [2.2.3 Generator 123]

Generator 123 uses trained GAN model 122 to generate a plurality of defective portion images. Generator 123 includes a processor and memory (not illustrated), and the processor executes a predetermined program stored in the memory to implement the generation process for causing trained GAN model 122 to generate a defective portion image.

In the present embodiment, generator 123 can apply noise to trained GAN model 122 to cause trained GAN model 122 to generate a defective portion image. Thus, generator 123 can apply noise with varied values to cause trained GAN model 122 to generate a plurality of defective portion images.

FIG. 4 is a diagram conceptually illustrating an example of a plurality of defective portion images according to the embodiment.

The example in FIG. 4 illustrates some of the plurality of defective portion images generated by trained GAN model 122 by applying noise with varied values. In FIG. 4, each figure on a white background indicates a defective portion, namely a defect. As illustrated in FIG. 4, it can be seen that using the trained GAN model 122 enables generation of not only a defect similar to the seed image group but also a defect that is similar to but different from the defect similar to the seed image group.

In this manner, generator 123 can cause trained GAN model 122 to generate not only a defective portion image having a defect similar to the seed image group, the features of which have been learned, but also a defective portion image having a defect that is similar to but different from the defect similar to the seed image group.

### [2.3 Combination Processing Unit 13]

As illustrated in FIG. 2A, combination processing unit 13 includes geometric transformer 131, combiner 132, and image sorter 133. Combination processing unit 13 combines each of a plurality of defective portion images with a good product image group. to generate a defective product image group.

### [2.3.1 Geometric Transformer 131]

Geometric transformer 131 geometrically transforms the plurality of defective portion images generated by defective portion image generator 12. Geometric transformer 131 includes a processor and memory (not illustrated), and the processor executes a predetermined program stored in the memory to implement each of processes including the geometric transformation process.

In the present embodiment, geometric transformer 131 binarizes each of the plurality of defective portion images generated by defective portion image generator 12, thereby separating each defective portion image into a background and a defect part, and adding an alpha channel as a transparent layer to the background. Geometric transformer 131 geometrically transforms the image with the alpha channel added to the background.

FIG. 5A is a diagram conceptually illustrating an example of a defective portion image according to the embodiment. FIG. 5B is a diagram conceptually illustrating an example of an image with an alpha channel added to the background of the defective portion image illustrated in FIG. 5A. FIG. 5C is a diagram conceptually illustrating an example of an image obtained by performing a geometric transformation, which is a rotation, on the image with the alpha channel added to the background illustrated in FIG. 5B.

That is, geometric transformer 131 binarizes the defective portion image, for example illustrated in FIG. 5A, generated by defective portion image generator 12, thereby separating the defective portion image into a background and a defect part, and adding an alpha channel to the separated background to obtain an image (defective product image), for example illustrated in FIG. 5B. Geometric transformer 131 performs a geometric transformation of rotation on the image with the alpha channel added to the background, illustrated in FIG. 5B, and obtains the image illustrated in FIG. 5C.

### [2.3.2 Combiner 132]

Combiner 132 combines each of the plurality of defective portion images with a good product image group. Combiner 132 includes a processor and memory (not illustrated), and the processor executes a predetermined program stored in the memory to implement the composition process.

In the present embodiment, combiner 132 can combine a good product image with an image, which has been subjected to a process such as geometric transformation by geometric transformer 131 and includes a background with an alpha channel added thereto, to obtain a defective product image candidate as a candidate for a defective product image. Therefore, combiner 132 can combine a good product image group with each of the plurality of defective portion images, which have been subjected to a process such as geometric transformation by geometric transformer 131, to obtain a defective product image group candidate. When defective product image group candidates are not sorted by image sorter 133, which will be described later, all the defective product image group candidates become defective product image groups, and when the defective product image group candidates are sorted, only the sorted defective product image group candidates become defective product image groups.

FIG. 5D is a diagram conceptually illustrating an example of good product image 50 according to the embodiment. FIG. 5E is a diagram conceptually illustrating an example of defective product image candidate 51 according to the embodiment.

That is, combiner 132 can combine an image, for example, illustrated in FIG. 5C, obtained by geometric transformer 131 performing a process such as geometric transformation on an image, for example, illustrated in FIG. 5B, with the good product image illustrated in FIG. 5D to obtain defective product image candidate 51 as illustrated in FIG. 5E. The image illustrated in FIG. 5C is an example, and the image illustrated in FIG. 5B can be subjected to various geometric transformations. Therefore, combiner 132 can combine each of the defective portion images subjected to various geometric transformations with the good product image group to obtain variations in defective product image candidate 51.

### [2.3.3 Image Sorter 133]

Image sorter 133 determines whether the image (defective product image candidate) combined by combiner 132 is appropriate as a defective product image. Image sorter 133 includes a processor and memory (not illustrated), and the processor executes a predetermined program stored in the memory to implement the determination process and other processes.

More specifically, image sorter 133 determines that the combined image is appropriate as a defective product image when the area and luminance of the defective portion that appears in the combined image satisfy predetermined criteria. Image sorter 133 determines that the combined image is not appropriate as a defective product image when the area or the luminance of the defective portion that appears in the combined image does not satisfy the predetermined criteria. Note that image sorter 133 may use a difference image obtained by taking a difference between, for example, good product image 50 illustrated in FIG. 5D and defective product image candidate 51 illustrated in FIG. 5E to determine whether the area and luminance of the defect part (defective portion) included in the differential image satisfy the predetermined criteria. Then, image sorter 133 includes, in the defective product image group, only the image determined to be appropriate among the combined images.

When an outer region or the like that is not a manufactured product region appears in the good product image, a defective product image candidate, in which the defective portion (defect part) is combined in the outer region, is not effective for classification model training. That is, there may be a region in the good product image where the defective portion is not to be combined. In such a case, it is sufficient to prepare a mask image in which the region where the defective portion is not to be combined is filled with black, and determine whether the image (defective product image candidate) combined by combiner 132 is appropriate as the defective product image.

More specifically, first, image sorter 133 obtains a masked defective product image candidate and a masked good product image candidate: the masked defective product image candidate is obtained by combiner 132 combining a prepared mask image with a defective product image candidate, while the masked good product image candidate is obtained by combining a mask image with a good product image from which the defective product image candidate was derived. Next, image sorter 133 generates a difference image by taking the difference between those images (the masked defective product image candidate and masked good product image). Then, image sorter 133 may measure the luminance and area of the defective portion included in the generated difference image and determine whether the luminance and area satisfy the predetermined criteria. Thereby, the defective product image candidate in which the defective portion is combined with the region of the good product image where the defective portion is not to be combined is excluded from a training image group used for classification model training, which will be described later.

FIG. 6A is a diagram conceptually illustrating an example of mask image 52 according to the embodiment. FIG. 6B is a diagram conceptually illustrating an example of masked good product image 50a according to the embodiment. That is, FIG. 6B illustrates an example of masked good product image 50a obtained by image sorter 133 causing combiner 132 to combine mask image 52 illustrated in FIG. 6A with good product image 50 illustrated in FIG. 5D.

FIG. 6C is a diagram conceptually illustrating an example of masked defective product image candidate 51a according to the embodiment. That is, FIG. 6C illustrates an example of masked defective product image candidate 51a obtained by image sorter 133 causing combiner 132 to combine mask image 52 illustrated in FIG. 6A and defective product image candidate 51 illustrated in FIG. 5E.

FIG. 6D is a diagram conceptually illustrating an example of difference image 53 according to the embodiment. That is, FIG. 6D illustrates an example of difference image 53 generated by image sorter 133 taking the difference between masked good product image 50a illustrated in FIG. 6B and masked defective product image candidate 51a illustrated in FIG. 6C.

In this manner, image sorter 133 uses the mask image illustrated in FIG. 6A to generates difference image 53 illustrated in FIG. 6D, for example. Then, image sorter 133 determines whether the luminance and area of the defective portion included in difference image 53 satisfy the predetermined criteria. Thus, when defective product image candidate 51 illustrated in FIG. 5E is a defective product image candidate in which the defective portion is combined in the region of the good product image where the defective portion is not to be combined, image sorter 133 can exclude defective product image candidate 51 illustrated in FIG. 5E from the defective product image group.

### [3. Model Generating Device 20]

FIG. 7 is a block diagram illustrating an example of the detailed configuration of model generating device 20 according to the embodiment.

Model generating device 20 performs classification training based on a good product image group and a defective product image group, generated by image generating device 10, to generate a classification model

Model generating device 20 is implemented, for example, by a computer equipped with a processor (microprocessor), memory, a communication interface, and the like, and the processor executes a control program stored in the memory to implement various functions. Note that model generating device 20 may operate with a partial configuration included in a cloud server.

In the present embodiment, model generating device 20 includes storage 21, extractor 22, classification model generator 23, and training database (DB) 24, as illustrated in FIG. 1. Hereinafter, each component will be described.

### [3.1 Storage 21]

Storage 21 is implemented by, for example, a hard disk drive (HDD) or flash memory.

In the present embodiment, storage 21 stores a good product image group and a defective product image group, generated by image generating device 10, as a generated image group. The number of images included in the generated image group is on the order of several hundred thousand, for example, but is not limited thereto. The number of defective product image groups included in the generated image group may be on the order of several tens to several hundred. In this case, a defective product image group generated by image generating device 10 is added to the generated image group by means such as model generating device 20 requesting image generating device 10 to add a defective product image group.

### [3.2 Extractor 22]

Extractor 22 extracts a part of the generated image group stored in storage 21 and outputs the extracted images to classification model generator 23 or stores the extracted images the extracted images in training DB 24.

In the present embodiment, extractor 22 extracts a part of the generated image group stored in storage 21, that is, a part of the good product image group and a part of the defective product image group, as initial training images and outputs the extracted images to training DB 24 and trainer 231. The number of initial training images extracted by extractor 22 may be small and may include, for example, five to ten good product images and five to ten defective product images, but is not limited thereto. The number of good product images and defective product images included in the initial training images can be selected at any time, but the number of good product images and defective product images is preferably set to about five to 100 each because if the number is too small, the classification model cannot be established, and if the number is too large, training cost becomes high.

Extractor 22 may extract images, other than the initial training images, as evaluation images from the generated image group stored in storage 21, and output the extracted images to evaluator 233.

### [3.3 Classification Model Generator 23]

As illustrated in FIG. 7, classification model generator 23 includes trainer 231, classification model 232, evaluator 233, and determiner 234. Classification model generator 23 performs classification training using a part of the good product image group and a part of the defective product image group as a training image group to generate classification model 232.

Each component will be described below.

### [3.3.1 Classification Model 232]

Classification model 232 is an identification model formed of an architecture including one or more convolutional layers. In the present embodiment, classification model 232 is formed of, for example, a convolutional neural network (CNN), but is not limited thereto. Classification model 232 may be a model that includes one or more convolutional layers and is subjected to classification training using a training image group so that the model can classify between a good product image and a defective product image.

### [3.3.2 Trainer 231]

Trainer 231 causes classification model 232 to undergo classification training using the training image group, thereby generating a classification model. Trainer 231 includes a processor and memory (not illustrated), and the processor executes a predetermined program stored in the memory to implement a training process for training classification model 232.

More specifically, first, trainer 231 uses the initial training images, which are part of the good product image group and the defective product image group as the training image group, to causes classification model 232 to undergo classification training. Trainer 231 causes classification model 232 to undergo classification training using the training image group updated by determiner 234. In this manner, trainer 231 repeats classification training to generate trained classification model 232.

In the present embodiment, trainer 231 first trains classification model 232 using a small number of initial training images as the training image group. Next, trainer 231 trains classification model 232 using the training image group updated by adding an incorrect result image group, which includes one or more incorrect result images to be described later, to the initial training images. Then, trainer 231 repeatedly trains classification model 232 using the repeatedly updated training image group to generate trained classification model 232.

Note that trainer 231 may retrain classification model 232 when training classification model 232 with the updated training image group. Furthermore, the values of the parameters of previously trained classification model 232 may be set to initial values, the layers constituting previously trained classification model 232 may be frozen, and previously trained classification model 232 may then be subjected to transfer training with the updated training image group.

### [3.3.3 Evaluator 233]

Evaluator 233 causes classification model 232 to evaluate at least a part of the good product image group and a part of the defective product image group, excluding the training image group used for the classification training of classification model 232, among the good product image group and the defective product image group. The evaluation result includes a determination result indicating whether the image input to classification model 232 is a good product image or a defective product image, but is not limited thereto. The evaluation result may include a determination result indicating whether the image input to classification model 232 is a good product image or a defective product image, and the certainty of the determination result. The certainty of the determination result can easily be obtained from one previous layer of the output layer of classification model 232, which outputs a value indicating whether the image is a good product image or a defective product image. Note that evaluator 233 includes a processor and memory (not illustrated), and the processor executes a predetermined program stored in the memory to implement the evaluation process.

In the present embodiment, evaluator 233 causes classification model 232 to evaluate evaluation images obtained from extractor 22. The evaluation images are a part of the generated image group as described above. In other words, the evaluation images are at least a part of the good product image group and a part of the defective product image group, excluding the training image group used for the classification training of classification model 232, among the good product image group and the defective product image group.

### [3.3.4 Determiner 234]

Determiner 234 determines whether the evaluation result from the evaluation by classification model 232 is an incorrect result. Here, when the determination result is incorrect or the certainty of the determination result is less than or equal to a predetermined value, determiner 234 determines that the evaluation result is an incorrect result. Furthermore, determiner 234 adds only the good product image or the defective product image determined as an incorrect result to the training image group to update the training image group.

In addition, determiner 234 can set training termination conditions including, for example, the number of training iterations and the number of evaluation images and cause trainer 231 to perform classification training on classification model 232 using the updated training image group. In this case, determiner 234 terminates the classification training of trainer 231 when the training termination conditions are reached.

Note that determiner 234 includes a processor and memory (not illustrated), and the processor executes a predetermined program stored in the memory to implement these various processes.

In the present embodiment, the defective product image group included in the evaluation image, which is evaluated by classification model 232, is generated by image generating device 10. Accordingly, it is already known whether the evaluation image evaluated by classification model 232 is a good product image or a defective product image. Therefore, when the determination result included in the evaluation result from the evaluation by classification model 232 is incorrect or the certainty of the determination result is less than the predetermined value, determiner 234 can determine that the evaluation result is an incorrect result. Then, determiner 234 can add only an incorrect result image, which is a good product image or a defective product image determined as an incorrect result, to the training image group to update the training image group. That is, determiner 234 can add only an incorrect result image to the training image group without performing a sorting operation, thereby increasing the number (data) of training image groups.

When even one of the evaluation images is an incorrect result image, determiner 234 may add only the incorrect result image to the training image group to update the training image group, and cause classification model 232 to undergo classification training using the updated training image group. When it is determined that a predetermined number of images among the evaluation images are incorrect result images, determiner 234 may add the incorrect result images to the training image group to update the training image group and cause classification model 232 to undergo classification training using the updated training image group. Moreover, in this case, to improve the efficiency of training, the value determined based on the predetermined number of images may be decreased as classification training is repeated. This is because as the training of classification model 232 progresses, the number of times the evaluation result is determined as an incorrect result decreases.

### [3.4 Training DB 24]

Training DB 24 is implemented by, for example, a hard disk drive (HDD) or a solid-state drive (SSD).

Training DB 24 stores a training image group including at least initial training images. The training image group is updated by determiner 234. The training image group includes only the initial training images during the initial training of classification model 232, but is subsequently updated by adding one or more incorrect result images. As the training of classification model 232 progresses, the training image group is updated to include the initial training images and an incorrect result image group.

### [4. Operation of Classification Model Generating System 1]

Next, an example of the operation of classification model generating system 1 configured as described above will be described below.

FIG. 8 is a flowchart illustrating processes in the classification model generating method for classification model generating system 1 according to the embodiment.

Classification model generating system 1 includes a processor and memory, and uses a program recorded in the processor and the memory to perform the following processes of steps S1 to S4.

More specifically, first, classification model generating system 1 obtains a good product image group including a plurality of good product images (S1).

Next, classification model generating system 1 generates a plurality of defective portion images based on a seed image group obtained by geometrically transforming a seed image that is artificially drawn to simulate a defective portion (S2).

Next, classification model generating system 1 combines each of the plurality of defective portion images with a good product image group to generate a defective product image group (S3).

Next, classification model generating system 1 performs classification training using a part of the good product image group and a part of the defective product image group as a training image group to generate a classification model (S4).

### (Example 1)

FIG. 9 is a diagram illustrating the process flow of the classification model generating method according to Example 1.

FIG. 9 illustrates one specific aspect of the processes in the classification model generating method performed using classification model generating system 1, and illustrates that, after an advance preparation phase, an image generation phase is performed, followed by a training and evaluation phase. It is also illustrated that the image generation phase and the training and evaluation phase can be looped.

As illustrated in FIG. 9, the advance preparation phase is performed first.

More specifically, classification model generating system 1 artificially draws a figure simulating a defective portion as a defect part according to a user operation, thereby generating one seed image that is an artificial image to serve as a defect seed (S11). Next, a geometric transformation process is performed on the one seed image generated in step S11 (S12). This makes it possible to obtain a seed image group in which an image that can be a defect has been augmented. Next, a training process is performed on a GAN model using the seed image group (S13). This enables the GAN model to learn the features of variations in defective portion (defect) from the seed image group.

After the advance preparation phase is performed in this manner, the image generation phase is performed. Note that a plurality of good product images are pre-prepared by being collected from an actual manufacturing process or the like.

More specifically, in classification model generating system 1, first, a plurality of pre-prepared good product images are input, and a geometric transformation process is performed on the input plurality of good product images (S14). Therefore, classification model generating system 1 can obtain a good product image group with rich variations by augmenting the plurality of good product images.

Classification model generating system 1 applies noise with varied values to the GAN model trained in the advance preparation to perform a generation process for generating a plurality of defective portion images (S15). By using the GAN model in this manner, classification model generating system 1 can produce variations in shape that are difficult to achieve through geometric transformation alone, and can thus obtain a wide variety of defective portion images.

Next, classification model generating system 1 performs the geometric transformation process on the plurality of defective portion images generated in step S15 (S16), and performs an image combination process for combining the defective portion images with a good product image group (S17). Thus, classification model generating system 1 can obtain defective portion image candidates obtained by combining a wide variety of defective portions of different shapes, positions, or the like with the good product image.

Next, classification model generating system 1 prepares a mask image in which the region where the defective portion is not to be combined is filled with black (S18), and performs an image sorting process for determining whether the defective product image candidates obtained by the combination in step S17 are appropriate as defective product images (S19). Thus, classification model generating system 1 can obtain a defective product image group obtained by selecting and excluding a defective product image candidate in which the defective portion is combined in the region of the good product image where the defective portion is not to be combined. The defective product image group obtained in step S14 and the good product image group obtained in step S19 are used as a generated image group in the training and evaluation phase.

After the image generation phase is performed as described above, the training and evaluation phase is performed.

More specifically, classification model generating system 1 first extracts a part of the generated image group, that is, a part of the good product image group and a part of the defective product image group, as initial training images (S20). The extracted initial training images are made up of about ten to 30 good product images and defective product images. Next, classification model generating system 1 uses the initial training images extracted in step S20 to perform a training process on a classification model (S21). Next, classification model generating system 1 extracts as an evaluation image a generated image group other than the initial training images out of the generated image group (S22), and performs an evaluation process for causing the classification model to evaluate the extracted evaluation image (S23). As a result, classification model generating system 1 can obtain the evaluation result from the evaluation by the classification model trained using the initial training images.

Next, classification model generating system 1 performs a determination process for determining whether the evaluation result from the evaluation by the classification model trained using the initial training images is an incorrect result (S24). Here, the evaluation images are generated in the image generation phase, and it is already known whether each evaluation image is a good product image or a defective product image. Therefore, in the determination process in step S24, when the evaluation result is an incorrect result and the evaluation image of the evaluation result is determined to be an incorrect result image, the training image group is updated by adding only the incorrect result image to the training image group. In this manner, classification model generating system 1 can accumulate only incorrect result images to the training image group to increase the number of training image groups.

Next, classification model generating system 1 determines a training termination condition and, while performing training termination determination, performs a training process for training the classification model using the training image group updated in step S24 (S25). Accordingly, classification model generating system 1 can terminate the training process for the classification model when the training termination condition is reached, and can thus repeat training with feedback only for an incorrect result.

Note that the number of evaluation images may not be sufficient to satisfy the training termination condition. In this case, the image generation phase can be repeated again to increase the generated image group, and then the evaluation process in step S23 through the training termination determination in step S25 may be performed to loop the image generation phase and the training and evaluation phase until the training termination condition is satisfied (S26).

### (Example 2)

In Example 2, the effectiveness of the classification model generating method according to the embodiment was verified. The results of the verification will be briefly described.

In the present verification, one seed image artificially generated to resemble foreign matter and 1,000 good product images collected and prepared in advance were used. The training termination condition was set to either passing 30,000 evaluation images without an incorrect result or executing 30 training loops. In the present verification, VGG16, a CNN model including 16 layers, was used as the classification model; Adam was used as an optimizer (optimization algorithm), the learning rate was set to 10⁻⁶, and the number of epochs was set to 30. Note that the learning rate was varied according to the number of training iterations.

As a result of the present verification, the following results were obtained:
- Training loop: 7 times
- Final number of images trained: 517 OK / 102 NG
- Final accuracy: 100%

From the above verification results, it was found that the classification model generating method according to the embodiment can achieve 100% classification model accuracy.

In this manner, the effectiveness of the classification model generating method according to the embodiment was verified.

### [5. Effects, etc.]

According to the embodiment described above, classification model generating system 1 and the like can generate, without collecting and sorting defective product images, a classification model capable of classifying between a good product image and a defective product image.

For example, when defective product images are collected from an actual manufacturing process or the like, the time and effort to collect defective product images and a sorting operation such as adding class labels are required. Although there is a method to collect only good product images and generate a classification model using only the good product image, it is difficult to set criteria for determining a defective product image, such as defining a defect mode (defect) to be identified.

On the other hand, in the present embodiment, although good product images are collected from an actual manufacturing process or the like, defective product images are generated based on an artificially generated seed image that simulates a defect (defective portion), such as a scratch or foreign matter, without collecting defective product images from the actual manufacturing process or the like. As a result, a classification model can be generated using a training image group generated from the generated defective product images and the collected good product images. In other words, it is possible to generate, without collecting and sorting defective product images, a classification model capable of classifying between a good product image and a defective product image.

According to the embodiment, since the collected good product image can be augmented through geometric transformation or the like, a wide variety of defective product images can be generated by combining the augmented good product images with defective portion images generated based on the seed image.

Here, a GAN model trained using a seed image group obtained by geometrically transforming and augmenting the seed image can be used to generate defective portion images. Thus, as long as the seed image is artificially created (generated), the location range and shape of the actual defective portion can be roughly set, enabling the production of variations in the defective portion image that show a defective portion with a shape difficult to achieve through geometric transformation alone.

Moreover, according to the embodiment, the evaluation of the generated classification model is performed, and the classification model is repeatedly trained using the training image group, which includes the incorrect result image, while only an incorrect result is fed back. This makes it possible to develop a classification model with higher accuracy while suppressing calculation cost required for the training process.

Note that the training image group produced as a byproduct includes only images with incorrect results, other than the images initially used as the training images, and will thus become a carefully selected training image group. This makes it easier to generate a more accurate classification model than by training a classification model using randomly selected images from the generated defective product images and good product images. Furthermore, since the number of images included in the training image group can be relatively small, a more accurate classification model can be trained at high speed.

### (Note)

According to the description of the above embodiments, the following techniques are disclosed.

### (Technique 1)

A classification model generating system including: an obtainer that obtains a good product image group including a plurality of good product images; a defective portion image generator that generates a plurality of defective portion images, based on a seed image group obtained by geometrically transforming a seed image simulating a defective portion, the seed image being an artificially drawn image; a combination processing unit that combines each of the plurality of defective portion images with the good product image group to generate a defective product image group; and a classification model generator that performs classification training by using a part of the good product image group and a part of the defective product image group as a training image group to generate a classification model.

In this manner, defective product images can be generated based on an artificially generated seed image that simulates a defect (defective portion), such as a scratch or foreign matter, without collecting a defective product image from an actual manufacturing process or the like. As a result, a classification model can be generated using a training image group generated from the generated defective product images and the collected good product images. In other words, it is possible to generate, without collecting and sorting defective product images, a classification model capable of classifying between a good product image and a defective product image.

### (Technique 2)

The classification model generating system according to technique 1, wherein the obtainer includes: an input unit to which the plurality of good product images are input; and a good product image generator that geometrically transforms the plurality of good product images input to the input unit to generate one or more new good product images and obtains, as the good product image group, the plurality of good product images and the one or more new good product images.

In this manner, a plurality of pre-prepared good product images can be augmented through geometric transformation. Thus, the plurality of good product images can be augmented to obtain a good product image group with rich variations.

### (Technique 3)

The classification model generating system according to technique 1 or 2, wherein the classification model generator includes: a trainer that causes a model to undergo classification training by using the training image group; an evaluator that causes the model to perform an evaluation on at least a part of the good product image group and a part of the defective product image group, excluding the training image group used for the classification training by the model, among the good product image group and the defective product image group; and a determiner that determines whether an evaluation result from the evaluation by the model is an incorrect result, and updates the training image group by adding only a good product image or a defective product image determined as an incorrect result to the training image group. The trainer causes the model to undergo classification training by using the training image group updated, to generate the classification model.

As described above, the evaluation of the generated classification model is performed, and the classification model can be repeatedly trained using the training image group that includes the incorrect result image while only an incorrect result is fed back. This makes it possible to develop a classification model with higher accuracy while suppressing calculation cost required for the training process.

The training image group produced as a byproduct includes only images with incorrect results, other than the images initially used as the training images, and will thus become a carefully selected training image group. This makes it easier to generate a more accurate classification model than by training a classification model using randomly selected images from the generated defective product images and good product images. Furthermore, since the number of images included in the training image group can be relatively small, a more accurate classification model can be trained at high speed.

### (Technique 4)

The classification model generating system according to technique 3, wherein the evaluation result includes a determination result indicating whether an image input to the model is a good product image or a defective product image and certainty of the determination result.

### (Technique 5)

The classification model generating system according to technique 4, wherein the determiner determines that the evaluation result is an incorrect result when the determination result is incorrect or when the certainty is less than or equal to a predetermined value.

### (Technique 6)

The classification model generating system according to any one of techniques 1 to 5, wherein the combination processing unit includes: a combiner that combines each of the plurality of defective portion images with the good product image group; and an image sorter that determines whether each of resultant images generated by the combiner is appropriate as a defective product image.

Therefore, an inappropriate image can be determined as is and excluded, thereby generating a more suitable defective product image.

### (Technique 7)

The classification model generating system according to technique 6, wherein the image sorter determines that an image combined is appropriate as the defective product image when an area and luminance of a defective portion that appears in the image combined satisfy predetermined criteria, the image combined being each of the images combined, determines that the image combined is not appropriate as the defective product image when the area or luminance of the defective portion that appears in the image combined does not satisfy the predetermined criteria, and includes, in the defective product image group, only the image determined to be appropriate among the images combined.

In this manner, for example, a defective product image in which the defective portion is combined in the region of the good product image where the defective portion is not to be combined can be determined as not appropriate and excluded. Thus, the classification model can be trained to accurately classify a defective product image having a defect mode to be identified as a defective product image.

### (Technique 8)

The classification model generating system according to any one of techniques 1 to 7, wherein the defective portion image generator generates the defective portion image by using a generative adversarial network (GAN) model that has been trained, and the GAN model has been trained using the seed image group.

Thus, by using the GAN model trained with the seed image group based on the seed image, it is possible to produce variations in the shape of the defective portion that are difficult to achieve through geometric transformation alone. As a result, a wide variety of defective portion images can be obtained.

### (Technique 9)

The classification model generating system according to any one of techniques 1 to 7, wherein the seed image includes a background and a defect part simulating a defective portion, and the background and the defect are separable by a single threshold.

Thus, the defect part and the background of the seed image are separable by a single threshold, facilitating processing, such as making the background transparent. Therefore, the geometrically transformed seed image can be easily combined with a pre-prepared good product image, facilitating generation of a defective product image.

### (Technique 10)

The classification model generating system according to technique 9, wherein the background is filled with a single color.

This facilitates processing, such as making the background transparent.

### (Possibility of Other Embodiments)

Although the classification model generating system, classification model generating method, and program of the present disclosure have been described above in the embodiment, the subject and device in which each process is performed are not particularly limited. Each process may be performed by a processor or the like (described below) incorporated in a specific device located locally. Each process may also be performed by a cloud server or the like located at a location different from the local device.

Note that the present disclosure is not limited to the above embodiment. For example, another embodiment implemented by arbitrarily combining the components described herein or excluding some of the components may be an embodiment of the present disclosure. The present disclosure also includes variations obtained by applying various modifications to the above embodiment, which can be conceived of by a person skilled in the art, without departing from the gist of the present disclosure, that is, the meaning indicated by the wording of the claims.

The present disclosure also includes the following cases.
(1) The above system is specifically a computer system formed of a microprocessor, read-only memory (ROM), random-access memory (RAM), hard disk unit, display unit, keyboard, mouse, and the like. The RAM or hard disk unit stores a computer program. The microprocessor operates according to the computer program, whereby each device achieves its function. Here, the computer program is constituted by a combination of a plurality of command codes that indicates instructions to the computer to achieve a predetermined function.
(2) Some or all of the components constituting the above system may be formed of a single system large scale integrated circuit (LSI). The system LSI is an ultra-multifunctional LSI manufactured by integrating a plurality of components on a single chip and is specifically a computer system including a microprocessor, ROM, RAM, and the like. The RAM stores a computer program. The microprocessor operates according to the computer program, whereby the system LSI achieves its function.
(3) Some or all of the components constituting the above system may be formed of an integrated circuit (IC) card or a single module detachable from each device. The IC card or the module is a computer system formed of a microprocessor, ROM, RAM, and the like. The IC card or the module may include the ultra-multifunctional LSI described above. The microprocessor operates according to the computer program, whereby the IC card or the module achieves its function. The IC card or the module may be tamper-resistant.
(4) The present disclosure may be the method described above. The present disclosure may be a computer program that causes a computer to implement these methods, or a digital signal including the computer program.
(5) In the present disclosure, the computer program or the digital signal may be recorded on a computer-readable recording medium, such as a flexible disk, a hard disk, a CD-ROM, a digital versatile disc (DVD), a DVD-ROM, a DVD-RAM, a blue-ray disc (BD), a semiconductor memory, or the like. In addition, the digital signal may be recorded on these recording media.

In the present disclosure, the computer program or the digital signal may be transmitted via a telecommunications line, a wireless or wired communication line, a network represented by the Internet, a data broadcast, or the like.

In the present disclosure, the computer system includes a microprocessor and memory, the memory stores the computer program, and the microprocessor may operate according to the computer program.

The present disclosure may also be implemented by another independent computer system by recording the program or digital signal on a recording medium and transferring this, or by transferring the program or digital signal via a network or the like.

### [Industrial Applicability]

The present disclosure is applicable to a classification model generating system, a classification model generating method, and a program, and is particularly applicable to a classification model generating system, a classification model generating method, and a program used for image visual inspection, image monitoring, and the like in factories.

### [Reference Signs List]

- 1: classification model generating system
- 10: image generating device
- 11: obtainer
- 12: defective portion image generator
- 13: combination processing unit
- 20: model generating device
- 21: storage
- 22: extractor
- 23: classification model generator
- 24: training DB
- 111: input unit
- 112: good product image generator
- 121: pre-processing unit
- 122: GAN model
- 123: generator
- 131, 1212: geometric transformer
- 132: combiner
- 133: image sorter
- 231, 1213: trainer
- 232: classification model
- 233: evaluator
- 234: determiner
- 1211: seed image generator

## Claims

1. A classification model generating system comprising:
an obtainer that obtains a good product image group including a plurality of good product images;
a defective portion image generator that generates a plurality of defective portion images, based on a seed image group obtained by geometrically transforming a seed image, the seed image having been artificially generated by drawing a part simulating a defective portion;
a combination processing unit that combines each of the plurality of defective portion images with the good product image group to generate a defective product image group; and
a classification model generator that performs classification training by using a part of the good product image group and a part of the defective product image group as a training image group to generate a classification model.

2. The classification model generating system according to claim 1,
wherein the obtainer includes:
an input unit to which the plurality of good product images are input; and
a good product image generator that geometrically transforms the plurality of good product images input to the input unit to generate one or more new good product images and obtains, as the good product image group, the plurality of good product images and the one or more new good product images.

3. The classification model generating system according to claim 1,
wherein the classification model generator includes:
a trainer that causes a model to undergo classification training by using the training image group;
an evaluator that causes the model to perform an evaluation on at least a part of the good product image group and a part of the defective product image group, excluding the training image group used for the classification training by the model, among the good product image group and the defective product image group; and
a determiner that determines whether an evaluation result from the evaluation by the model is an incorrect result, and updates the training image group by adding only a good product image or a defective product image determined as an incorrect result to the training image group, and
the trainer causes the model to undergo classification training by using the training image group updated, to generate the classification model.

4. The classification model generating system according to claim 3,
wherein the evaluation result includes a determination result indicating whether an image input to the model is a good product image or a defective product image and certainty of the determination result.

5. The classification model generating system according to claim 4,
wherein the determiner determines that the evaluation result is an incorrect result when the determination result is incorrect or when the certainty is less than or equal to a predetermined value.

6. The classification model generating system according to any one of claims 1 to 5,
wherein the combination processing unit includes:
a combiner that combines each of the plurality of defective portion images with the good product image group; and
an image sorter that determines whether each of images generated by the combiner is appropriate as a defective product image.

7. The classification model generating system according to claim 6,
wherein the image sorter
determines that an image combined is appropriate as the defective product image when an area and luminance of a defective portion that appears in the image combined satisfy predetermined criteria, the image combined being each of the images combined,
determines that the image combined is not appropriate as the defective product image when the area or luminance of the defective portion that appears in the image combined does not satisfy the predetermined criteria, and
includes, in the defective product image group, only the image determined to be appropriate among the images combined.

8. The classification model generating system according to any one of claims 1 to 5,
wherein the defective portion image generator generates the defective portion image by using a generative adversarial network (GAN) model that has been trained, and
the GAN model has been trained using the seed image group.

9. The classification model generating system according to any one of claims 1 to 5,
wherein the seed image includes a background and a defect part simulating a defective portion, and the background and the defect are separable by a single threshold.

10. The classification model generating system according to claim 9,
wherein the background is filled with a single color.

11. A classification model generating method comprising:
obtaining a good product image group that includes a plurality of good product images;
generating a plurality of defective portion images, based on a seed image group obtained by geometrically transforming a seed image simulating a defective portion, the seed image being an artificially drawn image;
combining each of the plurality of defective portion images with the good product image group to generate a defective product image group; and
performing classification training by using a part of the good product image group and a part of the defective product image group as a training image group to generate a classification model.

12. A program for causing a computer to execute:
obtaining a good product image group that includes a plurality of good product images;
generating a plurality of defective portion images, based on a seed image group obtained by geometrically transforming a seed image simulating a defective portion, the seed image being an artificially drawn image;
combining each of the plurality of defective portion images with the good product image group to generate a defective product image group; and
performing classification training by using a part of the good product image group and a part of the defective product image group as a training image group to generate a classification model.
